# EUROPEAN PATENT APPLICATION

(11) **EP 4 755 992 A1**
(43) Date of publication of application: **10.06.2026**
(21) Application number: 25218363.7
(22) Date of filing: 25.11.2025
(51) Int. Cl.: C10B 19/00, C10B 53/02, C10B 53/07

(54) **A SYSTEM AND A METHOD FOR PYROLYZING PYROLYZABLE MATERIAL**

(30) Priority: 03.12.2024 FI 20246409
(71) Applicant: Valmet Technologies Oy, 02150 Espoo (FI)
(72) Inventor: NÄRHI, Tuomas, 33900 TAMPERE (FI); RAIKO, Mikko, 33900 TAMPERE (FI)
(74) Representative: Berggren Oy

(57) **Abstract**

The invention relates to a system for pyrolyzing pyrolyzable material (PM) to produce pyrolytic vapours (PV). The system comprises a pyrolysis reactor (100) for pyrolyzing pyrolyzable material (PM), a first particle separator (200) for separating the pyrolytic vapours (PV) and a first solid material fraction (SF1) from a pyrolysis product feed, and a particulate material heater (300) for heating the first solid material fraction. The particulate material heater (300) comprises second distributors (320) for feeding second fluidizing gas (Gas2) into the particulate material heater (300) to fluidize particulate material within the particulate material heater (300) and an electric heater (310) configured to electrically heat particulate material arranged in the particulate material heater (300). The invention relates also to a method for pyrolyzing pyrolyzable material (PM) to produce pyrolytic vapours (PV). The method comprises at a first period, heating the particulate material arranged in the particulate material heater (300) using an electrical heater (310), guiding heated particulate material from the particulate material heater (300) into the pyrolysis reactor (100).

## Description

### Technical field

The present invention generally relates to pyrolysis systems. Specifically, the present invention relates to electrified fast pyrolysis systems. The present invention generally relates to method for pyrolyzing pyrolyzable material, e.g. by using the pyrolysis system.

### Background

Pyrolysis systems are a known commodity in thermal treatment of materials, such as carbonaceous materials. A pyrolysis system may comprise a pyrolysis reactor, pyrolysis product feed cleaning equipment and means for providing heat to the pyrolysis reactor. Furthermore, fast pyrolysis systems comprise a circulating fluidized bed pyrolysis reactor, wherein heat is provided by hot particulate matter, which is fed to the pyrolysis reactor, e.g., from a combustion boiler, such as a fluidized bed boiler. Such a system is known at least from the document WO2021255330, Figs. 6 and 7.

A combustion boiler requires constant feeding and combustion of a fuel to continuously provide heat to the particulate matter within the combustion boiler and maintain the system running. Full dependence on combustion to provide heat adds to the rigidity of the process as, for example, the variance of fuel prices cannot be taken into consideration extensively. To maintain a combustion process and related parameters, such as the temperature within the boiler, constant rigorous control is required. A combustion process also generates a constant flow of flue gas and other impurities, which require further control and cleaning. Such impurities may hinder the pyrolysis process and pyrolysis product quality. Another combustion by-product is carbon dioxide, which is a greenhouse gas, contributing to climate change. In addition, as a combustion process requires oxygen, while the pyrolysis process occurs in absence of oxygen, special caution is needed to prevent oxygen from entering the pyrolysis reactor due to safety reasons.

### Summary

It has been found that the problem of prior art can be reduced by heating particulate material used in fast pyrolysis by electricity. Electrical heating can be used as an alternative or in addition to heating by combustion. Further benefits of using electricity will be discussed below. The invention is described in the independent claims. The embodiments, examples, and features described in this specification, dependent claims, and figures explain the embodiments of the invention.

### Brief description of the drawings

- Fig. 1: shows a principal view an embodiment of a system for pyrolyzing pyrolyzable material to produce pyrolytic vapours,
- Fig. 2: shows an embodiment of a particulate material heater of the system,
- Fig. 3: shows an embodiment of a particulate material heater of the system,
- Fig. 4: shows a principal view an embodiment of a system for pyrolyzing pyrolyzable material to produce pyrolytic vapours,
- Fig. 5a: shows a principal view an embodiment of a system for pyrolyzing pyrolyzable material to produce pyrolytic vapours,
- Fig. 5b: shows a principal view an embodiment of a system for pyrolyzing pyrolyzable material to produce pyrolytic vapours,
- Figs. 6a-6d: show some possibly options for electrically heating particulate material in the particulate material heater and, optionally, heating also such fluidizing gas that fluidizes bed material in the particulate material heater and/or heating the particulate material by combustion, when heating the particulate material electrically,
- Figs. 7a to 7c: show options for heating such fluidizing gas that fluidizes bed material in the particulate material heater while not heating particulate material electrically, except for heat exchange between the fluidizing gas and the particulate material if the fluidizing gas is heated electrically, and
- Figs. 8a and 8b: show options for heating particulate material in the particulate material heater by combustion, while not heating particulate material electrically.

### Detailed description

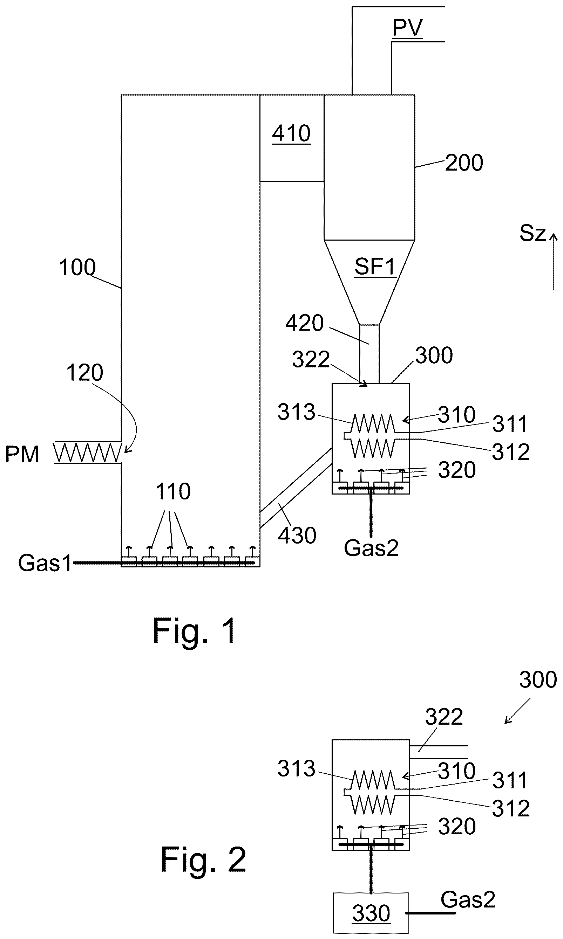

Figure 1 illustrates an embodiment of a system that comprises a pyrolysis reactor 100, a first particle separator 200 and a particulate material heater 300, and related equipment such as channels for guiding material flows between separate components of the system.

The pyrolysis reactor 100 is configured to pyrolyze pyrolyzable material PM to form a pyrolysis product feed. Hereinafter, the pyrolysis product feed refers to a mixture of the particulate material and the pyrolysis vapour products, as well as pyrolysis residuals, which are present in the pyrolysis reactor as a result of the fast pyrolysis. The pyrolysis reactor 100 comprises first distributors 110 for feeding first fluidizing gas Gas1 into the pyrolysis reactor 100. The first distributors 110 may be, for example, nozzles, perforated plate distributors, bubble cap distributors, cone-type distributors, or the like. The first fluidizing gas Gas1 is used to fluidize particulate material arranged in the pyrolysis reactor 100. A first inlet 120 is configured to feed pyrolyzable material PM into the system. The first inlet 120 may be configured to feed the pyrolyzable material directly into pyrolysis reactor 100, as in Fig. 1, or the first inlet 120 may be arranged in a third channel 430 configured to guide material from a particulate material heater 300 to the pyrolysis reactor 100 to feed the pyrolyzable material into pyrolysis reactor 100 via the third channel 430. A first channel 410 is configured to guide the pyrolysis product feed from the pyrolysis reactor 100 to the first particle separator 200. The pyrolyzable material is pyrolyzed in the pyrolysis reactor 100 by contacting, i.e. mixing, the pyrolyzable material PM with the particulate material. The temperature of the particulate material is sufficiently high for the pyrolyzation to occur and thus, the contacting of the two material flows leads to the formation of a pyrolysis product feed. The pyrolysis product feed may comprise of vaporous components and solid residue such as char and ash.

The first particle separator 200 is configured to treat the pyrolysis product feed, i.e. for separating pyrolytic vapours PV and a first solid material fraction SF1 from the pyrolysis product feed. Preferably, the first particle separator 200 is a cyclone. A second channel 420 is configured to guide the first solid material fraction SF1 from the first particle separator 200 to the particulate material heater 300. The first solid material fraction SF1 comprises particulate matter and solid residue from the pyrolyzable material both coming from the pyrolysis reactor 100. The solid residue (i.e. pyrolysis residue) may comprise char or other solid impurities, which will be described further on in the text. Thus, a technical function of the first particle separator 200 is to produce such pyrolytic vapours PV that contain less solids than the pyrolysis product feed as such. Moreover, the solids thus separated can be circulated to the pyrolysis reactor 100 through the particulate material heater 300.

The particulate material heater 300 is configured to heat the particulate material circulating in the system. The particulate material heater 300 comprises second distributors 320 for feeding second fluidizing gas Gas2 into the particulate material heater 300 to fluidize particulate material arranged in the particulate material heater 300 and an electric heater 310 configured to electrically heat the particulate material arranged in the particulate material heater 300. Concerning the second distributors 320, similar distributors are usable as detailed above for the first distributors 110. A second fluidizing gas Gas2, which is fed through the second distributors 320, forms a fluidized bed into the particulate material heater 300 thereby improving, for example, the material circulation through the particulate material heater 300 and heat transfer within the particulate material heater 300. A third channel 430 is configured to guide at least a part of a heated first solid material fraction from the particulate material heater 300 to the pyrolysis reactor 100.

In an embodiment, the electric heater 310 arranged in the particulate material heater 300 comprises a first electric lead 311, a second electric lead 312, and an electric conductor 313 connected to the first electric lead 311 and the second electric lead 312, the electric conductor 313 being configured to convert electric current running in between the first electric lead 311 and the second electric lead 312 to heat due to the Joule effect, wherein the electric conductor 313 is an integral piece of electrically conductive material. Thus, the particulate material is heated by heat transfer from the electric conductor 313 to the particulate material.

The combination of the electric heater 310 and related components and the fluidized bed arranged in the particulate material heater 300 result in vastly improved heat transfer from the electric heater 310 to the particulate material and within the particulate material itself, in comparison to transferring heat to a stationary, non-fluidized particulate material. The mixing of particulate material increases heat transfer within the particulate material, resulting in a more uniform temperature distribution within the particulate material, while the convective heat transfer coefficient is increased due to the movement of the second fluidizing Gas2 and the particulate material in the vicinity of the electric heater 310. In an embodiment, at least a part of the electrical heater 310 is arranged in a fluidized bed of the particulate material in the particulate material heater 300. In addition, the safety aspect of the particulate material heater 300 is improved with fluidization, as areas of elevated temperature, i.e. hot spots, with potentially dangerously high temperature levels are less likely to form within the particulate material heater 300.

Using the electric heater 310 arranged in the particulate material heater 300 to heat particulate material provides several advantages in comparison to providing heat via only combustion. The temperature level within the particulate material heater 300 and thus the temperature level of the particulate material leaving the particulate material heater 300 to enter the pyrolysis reactor 100 is simpler to control with the use of the electric heater 310, as controlling the heat provided with the electric heater 310 is a matter of controlling the electric current driven to the electric heater 310, rather than controlling a more variable, potentially unstable combustion process within the particulate material heater 300. In addition, by using electricity to heat the particulate material, a temperature thereof may be set lower than if the material was heated by combustion. Moreover, a fast pyrolysis process may be sensitive to the temperature of the particulate material, namely too hot particulate material may degrade the pyrolytic vapours PV. Preferable, a temperature of the particulate material entering the pyrolysis reactor 100 from the particulate material heater 300 is 300 °C to 750 °C, preferably 450 °C to 600 °C. In addition, if combustible solid residue, such as char, from the pyrolysis product feed are carried over to the particulate material heater 300, the oxygen content of the second fluidizing gas Gas2 may be selected, if needed, so that the char is not combusted but can be instead separated and collected from the particulate material heater 300, as is described further on in the text. When the electricity used comes from renewable sources, such as hydro, wind, or solar power, the direct carbon dioxide emissions of the system are also reduced in comparison to combustion of carbon-containing fuels.

In an embodiment, the pyrolyzable material PM comprises carbon. In an embodiment, the pyrolyzable material PM comprises at least 25 w% (percentage by weight) carbon in terms of dry mass, and preferably the pyrolyzable material PM comprises at least 40 w% carbon in terms of dry mass. The pyrolyzable material PM may comprise or consist of biomass. Biomass may comprise materials of animal origin and/or material of plant origin. In general, material of plant origin comprises lignocellulosic material. The pyrolyzable material PM may comprise polymer materials, e.g. plastics. The pyrolyzable material PM may comprise or consist of residue-derived material, such as refuse-derived fuel (RDF) and/or solid recovered fuel (SRF). In general, SRF is a special type of RDF, and SRF has a standardized quality.

Moreover, particularly when the pyrolyzable material is such a material that only a small amount of char is produced as pyrolysis residual, the calorific value of the char is typically insufficient for heating the particulate material enough for the pyrolysis. Such materials include plastics, such as polystyrene. Moreover, in such a case, the electrical heating can be used to replenish the heat formation of the process. Moreover, the aforementioned temperature ranges for the particulate material ensure that the pyrolytic vapours obtainable from plastics are not degraded. Thus, in a preferable embodiment, the pyrolyzable material PM contains at least 50 mass-% plastic, preferably at least 75 mass-% plastic, more preferably at least 90 mass-% plastic. Moreover, in a preferable embodiment, the pyrolyzable material PM contains at least 50 mass-% plastic of which at least half (by mass) is polystyrene, preferably at least 75 mass-% plastic of which at least half (by mass) is polystyrene, more preferably at least 90 mass-% plastic of which at least half (by mass) is polystyrene. More preferably, the pyrolyzable material PM contains at least 50 mass-% plastic and a temperature of the particulate material entering the pyrolysis reactor 100 from the particulate material heater is 300 °C to 750 °C. Notable, because the amount of pyrolysis residual is low, the oxygen content of the second fluidizing gas Gas2 may have a minor effect. However, preferably, the oxygen content of the second fluidizing gas Gas2 is low as detailed below.

The inventors have also noticed that when the pyrolyzable material PM contains a lot of plastics (or a lot of plastic material) in line with what has been said above, an amount of pyrolysis residuals is very small, and additionally a particle size of the pyrolysis residuals is small. Thus, in such a case, the small and light pyrolysis residual particles are easily entrained with the second fluidizing gas Gas2 while the larger and heavier bed material stays at a bed of the particulate material within the particulate material heater 300. In this way, by using a sufficient amount of the second fluidizing gas Gas2, circulation of the pyrolysis residual within the particulate material circulation can easily be prevented. Suitable material for the particulate material is detailed below, and such particulate material is beneficial particularly in the embodiment, wherein the pyrolyzable material PM contains a lot of plastics (or a lot of plastic material) in line with what has been said above. The inventors have found that about 70-80% of the pyrolysis residuals can be separated in this way.

In addition, in some use cases a value of the pyrolysis residue, e.g. char, may be so high and/or a price of electricity so low that it becomes economically feasible to collect the pyrolysis residue from the system without burning it, and instead heat the particulate material using electricity. The pyrolysis residue may be separated and collected as detailed above and further detailed below. Another way to collect the pyrolysis residue is to collect it from a bottom fraction obtainable from a bottom of the particulate material heater 300. If also other bed material is simultaneously collected as the bottom fraction, the pyrolysis residue can be separated therefrom, and the other bed material can be returned to the process. Furthermore, one possibility would be to collect the pyrolysis residue from a top fraction of the fluidized bed arranged in the particulate material heater 300, such as a fraction taken from a level of the surface S of the fluidized bed. If also other bed material is simultaneously collected as the top fraction, the pyrolysis residue can be separated therefrom, and the other bed material can be returned to the process. An outlet of the particulate material heater to the third channel 430 can be arranged at the bottom or at a level of the surface S to let out the bottom fraction or the top fraction, respectively; and a separator can be used to separate the residue. In the alternative, in addition the third channel 430 returning particulate material to the pyrolysis reactor 100, e.g. from a bottom or a level of the surface S of the particulate material in particulate material heater 300, a further channel may be arranged to receive a residue-rich fraction. An outlet to the further channel would be arranged, e.g., at a level of the surface S or a at a bottom of the particulate material heater 300, respectively.

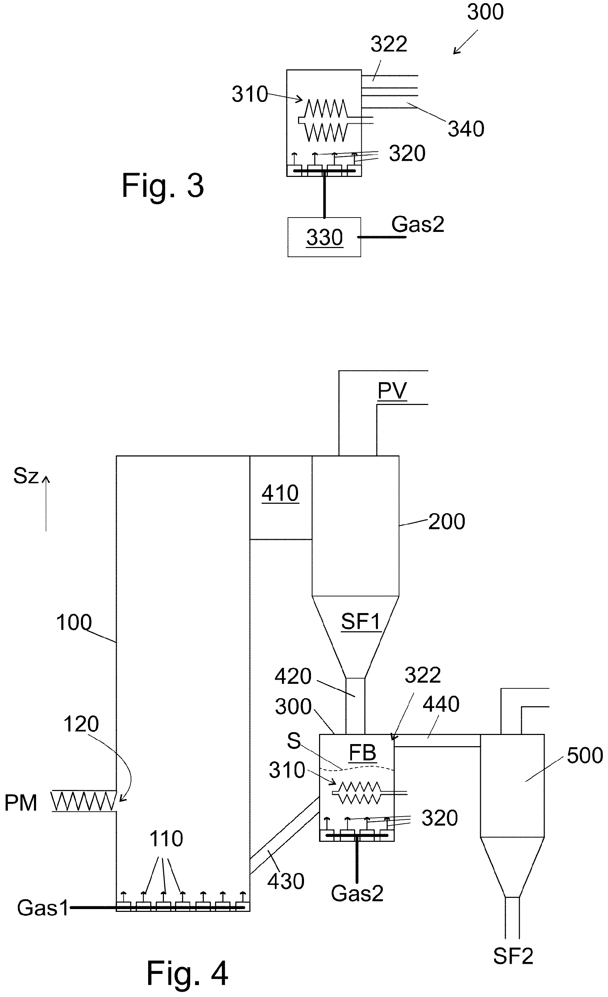

A suitable location for collecting pyrolysis residue depends on the process details: how heavy is the pyrolysis residual and what is a particle size of the residue. As a rule of thumb: heavy materials can be collected from the bottom fraction; light materials with a large particle size can be collected as the top fraction, and light material with a small particle size can be collected with the second fluidizing gas Gas2 (see Fig. 4). The fluidizing velocity of the second fluidizing gas Gas2 as well as the type and particle size of the particulate material also play a role in this. In addition, the content and particle size of the pyrolysis residual depends also on a content of the pyrolyzable material PM.

The temperature level control of the electric heater 310 is also related to the start-up, running, and shutdown of a heating process. The start-up and shutdown of the electric heater 310 is simpler, faster, and safer than the start-up and shutdown of a combustion process. The electric heater 310 effectively only requires the driving of electric current to the electric heater 310 and related temperature level control, whereas a combustion process requires at least the control of the fuel feed, the temperature control and flue gas cleaning equipment control, among others, during a start-up and a shutdown of the combustion process. These considerations also apply to constantly operating and running a heating process, not only the start-up and shutdown phases of a heating process.

With the exclusion of the combustion process in the particulate material heater 300, the second fluidizing gas Gas2 within the particulate material heater 300 may preferably be one with reduced oxygen content in comparison to a combustion gas such as air. This improves the safety aspect of the process, as it reduces potential hazards related to introducing oxygen-containing gases into the process, as the pyrolysis process taking place in the pyrolysis reactor 100 must be kept oxygen-free to prevent combustion or explosions from occurring. The lower oxygen level in the particulate material heater 300 also prevents the unwanted combustion of char if any has carried over to the particulate material heater 300. The combustion of char may be unwanted also for simplifying the temperature control of the particulate material heated in the particulate material heater. E.g. if the char (i.e. the pyrolysis residual) has significant calorific value, combustion thereof would heat the particulate material.

Using the electric heater 310 also reduces the amount of generated impurities of varying forms within the system compared to the prior art, wherein the particulate material is heated by combustion. Thus, the need for gas cleaning is also reduced, as no combustion flue gases are generated within the particulate material heater 300 in the case of arranging the heating only with electricity. If both electricity and combustion are used for heating the particulate material, the need for gas cleaning is also reduced, however, to a lesser extend.

In addition, when providing heat with combustion in the particulate material heater 300 as in prior art, not all impurities, such as combustion residuals, are carried over to the gas cleaning equipment, thus a part of impurities may end up circulating in the system. This can pose a problem, for example, in the pyrolysis reactor 100, as impurities may hinder the pyrolysis process, which may result in reduced process efficiency and product quality, among other problems. As so, the electric heater 310 further simplifies the process and decreases the need for additional control means, due to the decrease in material flows to be considered in process design.

The system of Fig. 1 comprises a particulate material heater 300 that has only the electric heater 310 (and the second distributors 320 and walls limiting an interior). Figures 2 and 3 illustrate further embodiments of the particulate material heater 300. In Figure 2, the particulate material heater 300 comprises a gas heater 330 configured to receive unheated second fluidizing gas Gas2, heat the unheated second fluidizing gas Gas2 to form heated second fluidizing gas Gas2, and feed the heated second fluidizing gas Gas2 to the second distributors 320. In an embodiment, the gas heater 330 comprises a second electric heater, a fuel-burning heater, or a hybrid electric-fuel-burning heater. If a fuel-burning heater, or a hybrid electric-fuel-burning heater is used, secondary fuel is burned in the gas heater 330 to form the heat required to heat the second fluidizing gas Gas2. However, preferably, the gas heater 330 comprises a second electric heater configured to convert only electric energy to heat. In particular, preferably the electric heater of the gas heater 330 comprises two leads and an electric conductor connected to the leads, the electric conductor being configured to convert electric current to heat due to the Joule effect. Thus, the second fluidizing gas Gas2 is heated by heat transfer from the electric conductor to the second fluidizing gas Gas2. In Figure 3, the particulate material heater 300 further comprises a second inlet 340 for feeding auxiliary fuel into the particulate material heater 300 for combustion. As shown in Figs. 1 to 4, the particulate material heater 300 further comprises an outlet 322 for letting out at least the second fluidizing gas Gas2. Depending on the feed rate of the second fluidizing gas Gas2 some particulate material and/or some pyrolysis residuals may exit the particulate material heater 300 with the second fluidizing gas Gas2 through the outlet 322.

The embodiment of Figure 2 provides means for heating the second fluidizing gas Gas2 that enters particulate material heater 300 via the second distributors 320. The heat content of the second fluidizing gas Gas2 improves the process heating efficiency, as it reduces the need of heating the particulate material arranged in the particulate material heater 300 with other means. The gas heater 330 can be of any aforementioned type, depending on the available resources regarding heating. If there is an abundance of cost-effective fuel available, a fuel-burning heater may be a viable option. Flexibility of the choice of heating means can be covered by a hybrid electric-fuel-burning heater, for example, if electricity prices are high in comparison to fuel prices. If an abundance of electricity if available or fuel is used in other applications, a second electric heater may be used for heating the second fluidizing gas Gas2. As with the electric heater 310, the control of the heating process and temperature is straightforward with the use of electricity, no additional flue gases to be treated are generated and carbon dioxide emissions are reduced when renewable electricity is used, among other. Furthermore, if electricity is expensive, heating the second fluidizing gas Gas2 by combustion provides an alternative way of heating the particulate material in the particulate material heater 300 also in such a case that the oxygen content of the second fluidizing gas Gas2 is low, e.g. for safety reasons. E.g. a second fluidizing gas Gas2 may be fed through a heat exchanger pipe that is heated by combustion.

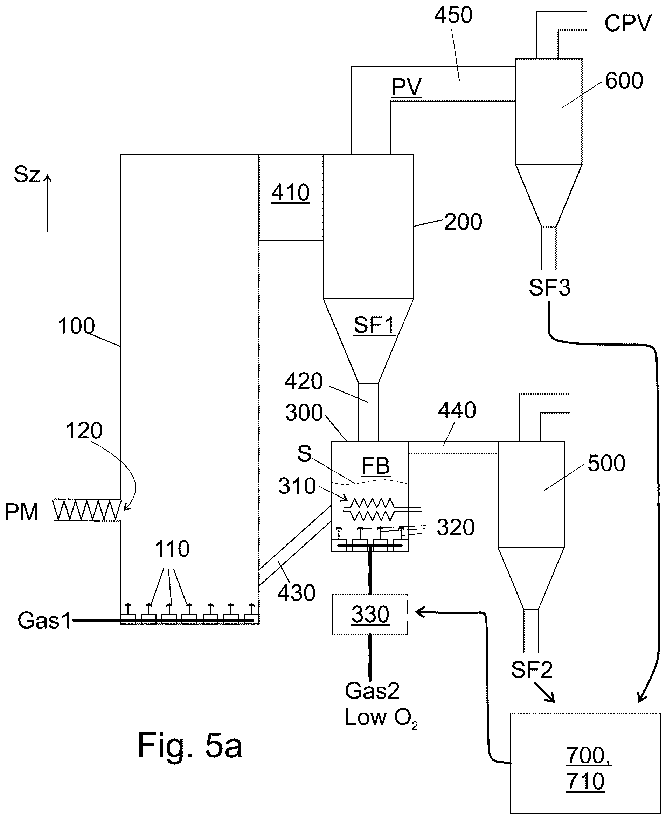

The embodiment of Figure 3 provides additional means for providing heat, i.e. an auxiliary fuel that is introduced via a second inlet 340 and combusted in the particulate material heater 300. The auxiliary fuel may comprise at least one of: gaseous fuel, such as natural gas, receivable from a container; liquid fuel, such as fuel oil, receivable from a container; gaseous fuel receivable from an equipment comprising the pyrolysis reactor 100; liquid fuel receivable from the equipment comprising the pyrolysis reactor 100; and solid fuel including or not including the pyrolyzable material. The equipment comprising the pyrolysis reactor 100, i.e. pyrolysis reactor equipment, may comprise, in addition to the pyrolysis reactor 100, for example, a condenser (not illustrated in Figures) for condensing condensable gases, such as the pyrolytic vapours PV, more preferably cleaned pyrolytic vapours CPV, to form a liquid feed that may be, for example, removed from the system and/or used as the auxiliary fuel, i.e. as the liquid fuel as previously described. Notably, the liquid fuel can be used also as the secondary fuel in the gas heater 330. The pyrolysis reactor equipment may comprise a particle separator 600 (shown in Fig. 5a). The gaseous fuel, e.g. used as the auxiliary fuel, may comprise the pyrolytic vapours PV or the cleaned pyrolytic vapours CPV. Also, the gaseous fuel may be used as the secondary fuel in the gas heater 330.

As for the gaseous fuel, such as natural gas, which is receivable from a container, in an embodiment the container is such a container that does not receive the gaseous fuel from the pyrolysis reactor equipment as defined above. I.e. the gaseous fuel, in this case, does not contain pyrolysis vapours or cleaned pyrolysis vapours. As for the liquid fuel, such as fuel oil, which is receivable from a container, in an embodiment the container is such a container that does not receive the liquid fuel from the pyrolysis reactor equipment as defined above. I.e. the liquid fuel, in this case, does not contain condensed pyrolysis vapours or condensed cleaned pyrolysis vapours.

Combustion of the auxiliary fuel is enabled with a sufficiently high oxygen content of the second fluidizing gas Gas2. Having a second or a third means of providing heat to the particulate material heater 300 alongside the electric heater 310 and/or the gas heater 330 can provide flexibility to the process and the system. Similarly, as with the gas heater 330 in the case of a hybrid electric-fuel-burning heater, having the choice to switch between electricity and combustion can be beneficial for the process economics, for example, at a time when electricity prices are high in comparison to available fuel prices. In addition, the option of burning pyrolysis process product flows, such as non-condensable gases and/or char, may reduce the need for other means of providing heat to the particulate material heater 300 while reducing the need to treat undesirable product flows externally.

Using the system for pyrolyzing the pyrolyzable material PM to produce pyrolytic vapours PV constitutes a method for pyrolyzing pyrolyzable material PM to produce pyrolytic vapours PV. In the method, particulate material is heated by electricity at least at a first period. However, there may be other periods, when the particulate material is not heated by electricity, or the particulate material is heated by electricity but by using less electric power to heat the particulate material. Moreover, during these periods, other means for heating the particulate material and/or the second fluidizing gas Gas2 can be used, as detailed above.

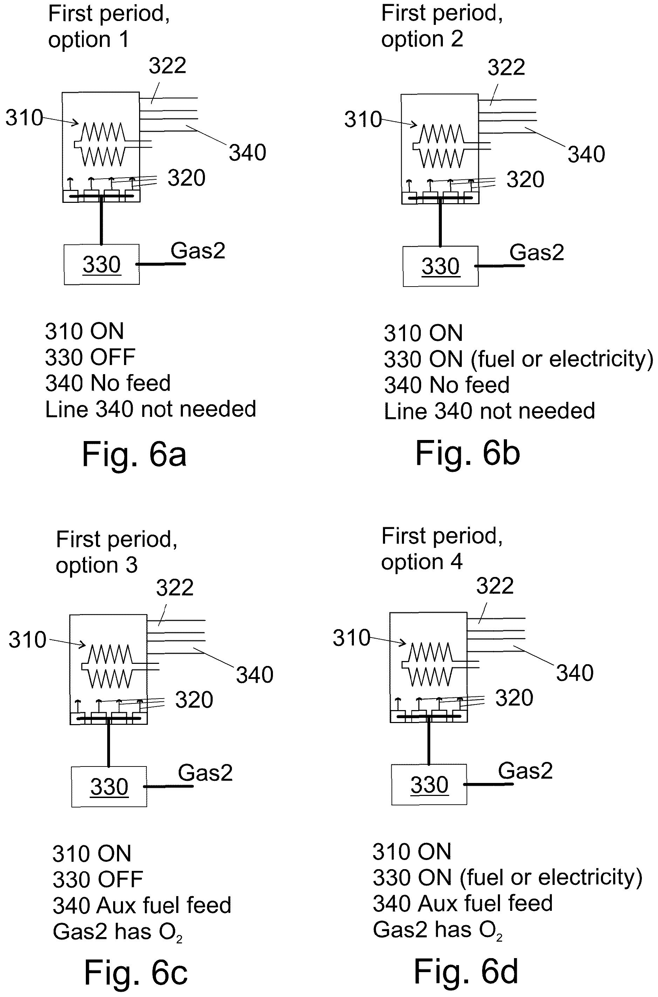

In the invention, the particulate material arranged in the particulate material heater 300 can be heated in various configurations with the heating equipment described before. These configurations are illustrated as periods that comprise different options in Figures 6a-6d, Figures 7a-7c and Figures 8a-8b. The periods and options are described next.

Illustrated in Figures 6a through 6d, at the first period, heating the particulate material arranged in the particulate material heater 300 is achieved by using an electrical heater 310. The electrical heater 310 is arranged in the particulate material heater 300. What has been said about the electrical heater 310 above applies in the context of the method. This is the case in all of the options 1-4 of Figs 6a to 6d. In addition to the electric heater 310, in the options 2 and 4 illustrated in Figures 6b and 6d, at the first period, heat is also provided by heating the second fluidizing gas Gas2 upstream from the second distributors 320. As detailed above, in an embodiment the gas heater 330, which is upstream from the second distributors 320 is used for heating the second fluidizing gas Gas2. In the embodiments of Fig. 6b and 6d, at the first period, the second fluidizing gas Gas2 is heated by burning secondary fuel or by using electricity or by using a hybrid electric-fuel-burning heater such that both the secondary fuel and the electricity is used. In the embodiments of Fig. 6a and 6b, the second fluidizing gas Gas2 does not need to contain oxygen, because auxiliary fuel is not used, but the second fluidizing gas Gas2 may contain oxygen, if considered feasible. In the options 3 and 4 illustrated in Figures 6c and 6d, at the first period, heat is also provided by feeding auxiliary fuel into the particulate material heater 300, wherein an oxygen content of the second fluidizing gas Gas2 is at least 15 vol.-% to allow combustion of the auxiliary fuel in the particulate material heater 300. Even if not shown in Figs. 6a-6d, if the second fluidizing gas Gas2 comprises oxygen, e.g. by the amount discussed above, combustion of the char and/or other pyrolysis residuals in the particulate material heater 300 may also heat the particulate material. Hereinabove, the auxiliary fuel refers to other combustible fuel than the pyrolysis residuals receivable with the first solid material fraction SF1 from the first particle separator 200.

As detailed above, when the pyrolyzable material PM contains a lot of plastics (or a lot of plastic material) in line with what has been said above, the amount of pyrolysis residual is reasonably small. Therefore, burning the pyrolysis residual in the particulate material heater 300 does not typically provide sufficiently heat for the pyrolysis. While further heat can be provided by the electrical heater 310, in particular when a price of electricity is high and/or a price of the auxiliary fuel is low, the supplemental heat can be provided by feeding the auxiliary fuel to the particulate material heater 300. Thus, using auxiliary fuel as a heat source is beneficial, when the pyrolyzable material PM contains a lot of plastics (or a lot of plastic material) in line with what has been said above. However, the auxiliary fuel may form ash and other residuals into the particulate material circulation. Such residuals may be detrimental for a quality of the pyrolytic vapours. Therefore, preferably, clean auxiliary fuel is used. Clean auxiliary fuels include gaseous and liquid fuels. An example of a clean auxiliary fuel is natural gas. However, as is obvious, the electrical heater 310 does not form any residuals, whereby use of the electrical heater is even more preferred, at least when electricity is not too expensive. Likewise heating the second fluidizing gas Gas2 by combustion and/or electricity does not form residuals into the particulate material circulation. Thus, heating the second fluidizing gas Gas2 is also beneficial in terms of quality of the pyrolytic vapours. Furthermore, if non-combusted pyrolysis residuals (e.g. char) are collected from the process, the second fluidizing gas Gas2 should have a low oxygen content to prevent combustion. Thus, in addition to the electric heater 310 as an alternative to it, the gas heater 330 can be used.

In certain situations, the use of the electric heater 310 may not be viable or economical, for example, due to high electricity prices. Therefore, alternate heating configurations are presented next.

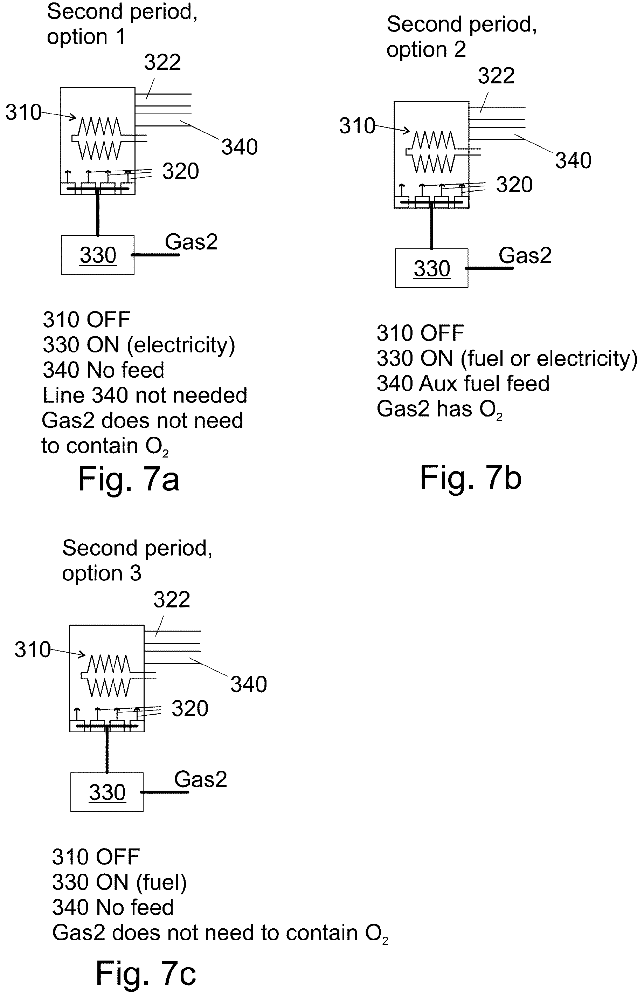

Illustrated in Figures 7a to 7c, in an embodiment, at a second period, the electrical heater 310 is not used to heat the particulate material arranged in the particulate material heater 300. Instead, in the options 1 to 3 illustrated in Figures 7a - 7c, heat is provided by heating the second fluidizing gas Gas2 upstream from the second distributors 320. In an embodiment, at the second period, the second fluidizing gas Gas2 is heated by burning secondary fuel or by using electricity or by using a hybrid electric-fuel-burning heater such that both the secondary fuel and the electricity is used. Naturally, in this scenario, the use of secondary fuel is the most promising heating option at least if the price of electricity is high, as it may be, because the heater 310 is not used. Thus, in an embodiment, a price of electricity at the second period is higher than at the first period, and the secondary fuel is used to heat the second fluidizing gas Gas2. In addition, in the option 2 illustrated in Figure 7b, heat is also provided by feeding auxiliary fuel into the particulate material heater 300, wherein an oxygen content of the second fluidizing gas Gas2 is at least 15 vol.-% to allow combustion of the auxiliary fuel in the particulate material heater 300. However, as depicted in Figs. 7a and 7c, when auxiliary fuel is not fed into the particulate material heater 300, an oxygen content of the second fluidizing gas Gas2 does not need to be high. This applies irrespective of whether the second fluidizing gas Gas2 is heated by electricity (Fig. 7a) or by the secondary fuel (Fig. 7c). Even if not shown in Figs. 7a to 7c, at the second period, the electrical heater 310 can be used, e.g. with a lower electric power than at the first period.

Whether, in this case, the heating of the second fluidizing gas Gas2 or burning the auxiliary fuel in the particulate material heater 300 is preferred is case dependent. Notably, in the former case, an oxygen content of the second fluidizing gas Gas2 may be low (but does not need to be low), but in latter case oxygen is needed for burning the auxiliary fuel.

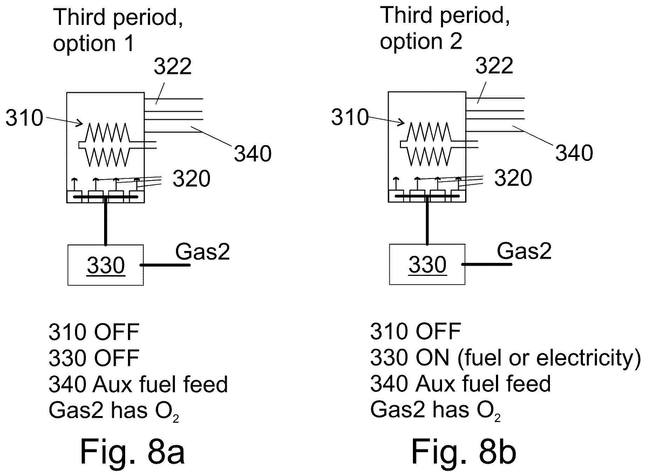

Illustrated in Figures 8a and 8b, in an embodiment, at a third period, the electrical heater 310 is not used to heat the particulate material arranged in the particulate material heater 300. Instead, in both options 1 and 2 illustrated in Figures 8a and 8b, heat is provided by feeding auxiliary fuel into the particulate material heater 300. Thus, in these embodiments, an oxygen content of the second fluidizing gas Gas2 is sufficient for allowing combustion of the auxiliary fuel in the particulate material heater 300. As for a proper value of the oxygen content, what has been said above, applies. In addition, in option 2 illustrated in Figure 8b, heat is also provided by heating the second fluidizing gas Gas2 upstream from the second distributors 320. Naturally, in this scenario, the use of auxiliary fuel is the most promising heating option at least if the price of electricity is high, as it may be, because the heater 310 is not used. Thus, in an embodiment, a price of electricity at the third period is higher than at the first period, and the auxiliary fuel is used to heat the particulate material. Even if not shown in Figs. 8a and 8b, at the third period, the electrical heater 310 can be used, e.g. with a lower electric power than at the first period.

Having a plurality of possible heating options improves the reliability and runnability of the system. For example, if a fault is detected in a component, such as an auxiliary fuel line, the change to providing heat with another heating means, such as the electric heater 310, may be done without having to shut down the whole system, but only the example component, reducing downtime and improving process economics.

The mode of operating the system can also automated by using a controller. Thus, in an embodiment, the system comprises a controller. The controller is configured, at the first period, to drive electric current to the electric heater 310 to electrically heat particulate material arranged in the particulate material heater 300 with a first electric power. The controller is also configured to receive information indicative of environment parameters affecting operating possibilities and/or costs of the particulate material heater 300. This information can be related to, for example, the price or availability of electricity or other electricity-related information, the price or availability of fuel or other fuel-related information, the need for repairing or changing a part or a component of the system or other service-related information, or the like. Following receiving the information, the controller is configured to determine by using the received information that, at a second period or a third period, heating particulate material with electricity is not possible or is less economical than during the first period. The controller is further configured, at the second period or at the third period, either not to drive any electric current to the electric heater 310 or to drive electric current to the electric heater 310 to electrically heat particulate material arranged in the particulate material heater 300 with a second electric power that is less than the first electric power.

In line with the embodiment of Figs. 7a to 7c, the controller may be configured to control the gas heater 330 of the particulate material heater 300 such that the second fluidizing gas Gas2 is heated upstream from the second distributors 320 at the second period. In line with the embodiment of Figs. 8a and 8b, the controller may be configured to control means for feeding auxiliary fuel into the particulate material heater 300 such that the auxiliary fuel is fed into the particulate material heater 300 at the third period.

In an example mode of operation, using electricity price as the information determining the choice of a period, the controller is configured to drive electric current to the electric heater 310 at the first period to electrically heat particulate material arranged in the particulate material heater 300. This is a way of operating the system at a period, when a price of electricity is low. Thus, the controller is also configured to receive information indicative of a price of electricity and to determine using the information that the price of electricity exceeds a first threshold. Moreover, in response to determining that the price of electricity exceeds the first threshold, the controller is configured stop driving electric current to the electric heater 310 at the second or the third period or to reduce the electric power driven to the electric heater 310.

However, because the operation of the system is enabled by heating the particulate material, in an embodiment, the controller is configured to at the second period, control the gas heater 330 of the particulate material heater 300 such that second fluidizing gas Gas2 is heated upstream from the second distributors 320. Moreover, in an embodiment, the controller is configured to at the third period, control means for feeding auxiliary fuel into the particulate material heater 300 such that the auxiliary fuel is fed into the particulate material heater 300. Such a controller or the means for feeding auxiliary fuel into the particulate material heater 300 are not shown in the figures.

Likewise, in an embodiment, the controller is configured to determine using the information indicative of the price of electricity that the price of electricity goes below a second threshold. Moreover, in response to determining that the price of electricity goes below the second threshold, the controller is configured start driving electric current to the electric heater 310. The second threshold may be lower than the first threshold to reduce the frequency of switching between electricity-based heating and combustion-based heating.

Similarly, other information than electricity price received by the controller can be used to alter the means of providing heat to the particulate material heater 300. For example, a price of the secondary the auxiliary fuel also affects the process economy. Moreover, if a fault is detected in a component that requires either repairing or changing, the controller may switch to an alternate period and means of providing heat, as described before. As indicated before, such information was considered information indicative of environment parameters affecting operating possibilities and/or costs of the particulate material heater 300.

When changing the mode of operation e.g. from electrically heated mode to an auxiliary fuel heated mode, or vice versa, it is also possible to change the oxygen content of the secondary fluidizing gas Gas2. Thus, when providing heat by the electrical heater 310 and/or by the gas heater 330, an oxygen content of the secondary fluidizing gas Gas2 may be low, e.g. less than 5 vol.-%. However, when using also or only auxiliary fuel for heating the particulate material in the particulate material heater 300, an oxygen content of the secondary fluidizing gas Gas2 is high, e.g. at least 15 vol.-%. Thus, even if occasionally auxiliary fuel is used and the oxygen content of Gas2 is high, at least at some periods the oxygen content of the secondary fluidizing gas Gas2 may be low to have the advantages related to low oxygen content, as detailed above.

As the electric heater 310 arranged in the particulate material heater 300 is an integral component of the system and can be thought to be a key addition to an ordinary pyrolysis system, the use of the electric heater 310, made available in the options presented in the first period which all include the use of the electric heater 310, for providing heat to the particulate material heater 300 can be thought to be as the most preferred way of providing heat to the system. The benefits of using the electric heater 310 instead of a combustion process, such as feeding auxiliary fuel via the second inlet 340 and combusting it in the particulate material heater 300 have been described previously in the text.

Many of the benefits of electrification also apply to the gas heater 330, i.e. heating the second fluidizing gas Gas2 with the use of the second electric heater or, in the case of a hybrid electric-fuel-burning heater the electric mode, instead of combustion-based fuel-burning heating. Thus, providing heat with the electrically heated second fluidizing gas Gas2 can be thought to be another preferred way of providing heat to the particulate material heater 300.

The combustion-based heat providing means are seen as a complemental means of providing heat to the particulate material heater 300, due to the benefits of use of electricity as described before. This includes the combustion of the auxiliary fuel in the particulate material heater 300 or fuel-burning for heating the second fluidizing gas Gas2. If use of the auxiliary fuel is required, preferably, the auxiliary fuel is fed into the particulate material heater 300 at the first, second, or third period, as detailed above.

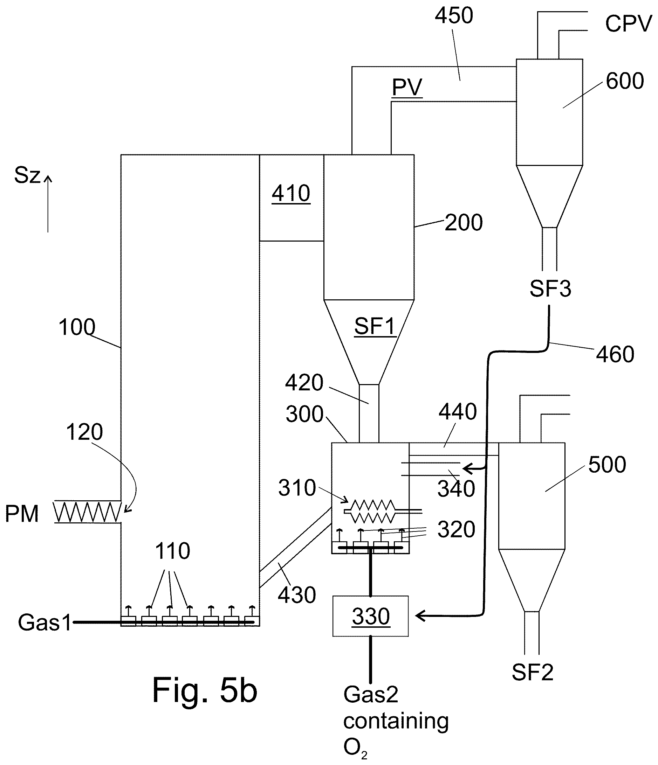

Figure 4 illustrates an embodiment of a system further comprising a second particle separator 500 and a fourth channel 440, wherein the fourth channel 440 is configured to guide a mixture of the second fluidizing gas Gas2 and a part of the particulate material arranged in the particulate material heater 300 from an upper part of the particulate material heater 300 to the second particle separator 500. The amount of particulate material to be guided and carried over to the second particle separator 500 can be optimized with process design considerations. For example, the size and shape of the particulate material heater 300 may be configured such that a lower part of the particulate material heater 300, the lower part being located at for example, where the second distributors 320 are arranged in, is narrower than an upper part of the particulate material heater 300, the upper part being located at for example, where the fourth channel 440 joins the particulate material heater 330 (not shown). In this way, in freeboard FB near the higher part of the particulate material heater 300 a flow velocity of the second fluidizing gas Gas2 is lower than in the lower part. Thus, a lower particulate material amount within the freeboard FB can be guided to the fourth channel 440, compared to the situation, wherein a cross-sectional area of the upper part and the lower part would be equal. Herein the term freeboard FB refers to the volume above a surface S of a fluidized bed arranged in the particulate material heater 300 (see Figs. 4 and 5). The freeboard FB is the dilute phase region in which the gas and particles disengage. A height of the freeboard FB of the particulate material heater 300 can be selected suitably large for separating only easily flowable residual materials from the particulate material within the particulate material heater. In an embodiment, the height of the freeboard FB is 1.5-10.5 meters, preferably 3.0-8.5 meters, more preferably 4.5-6.5 meters. The freeboard FB may be arranged between the surface S of a fluidized be arranged in the particulate material heater 300 and the fourth channel 440.

The fluidization velocity of the second fluidizing gas Gas2 is another process variable to consider. On one hand, if the fluidization velocity is too low, no fluidization may occur. On the other hand, if the fluidization velocity is too high, the amount of particulate matter leaving the particulate material heater 300 via the fourth channel 440 may be too high. Thus, the fluidization velocity has to be determined in order to successfully fluidize the particulate material within the particulate material heater 300 while guiding only a part of the particulate material to the fourth channel 440. Such a fluidization velocity may be, for example, 0.4-2.5 m/s. Another process design consideration may be the type of particulate material used, which is discussed further in the text.

In the embodiment of Figure 4 the particulate material leaving the particulate material heater 300 via the fourth channel 440 may comprise a solid fraction that is beneficial to remove from the system, for example, if the solid fraction is economically valuable enough to be separated or if the retaining of the solid fraction within the system would compromise the operation of the system. Thus, arranging a second particulate separator 500 to collect such a solid fraction, i.e. a second solid fraction SF2, may preferable. A solid fraction to be separated may be, for example, a fraction comprising char. This also reduces the problems related to pyrolysis residual recycling in the process, the problems being discussed above. By removing the pyrolysis residual with the second fluidizing gas Gas2 from the particulate material heater 300 the amount of pyrolysis residual recycling in the process will significantly decrease. This applies irrespective of whether the second fluidizing gas Gas2 comprises a lot or only a little oxygen. However, if the second fluidizing gas Gas2 comprises enough oxygen for combustion of the pyrolysis residuals, there may not be reasons for collecting the residual (i.e. an ash resulting from the combustion). However, naturally, the ash may be collected such that second solid fraction SF2 comprises the ash. This applies at least when the auxiliary fuel is burned in the particulate material heater 300, whereby the ash as preferably removed with the second fluidizing gas Gas2. Naturally the flue gases resulting from the combustion should be cleaned, and the second particle separator 500 can be used for the purpose.

Figures 5a and 5b illustrate embodiments of a system, comprising the features presented in Figure 4, a third particle separator 600 configured to separate from the pyrolytic vapours PV a third solid material fraction SF3 and cleaned pyrolytic vapours CPV and a fifth channel 450, wherein the fifth channel 450 is configured to guide the pyrolytic vapours PV from the first particle separator 200 to the third particle separator 600. The third particle separator 600 has the effect that the pyrolytic vapor can be cleaned to a greater extent than by using only one particle separator. This effect does not depend on the presence of the second particle separator 500.

The embodiment of Figure 5a further comprises a container 700 or a pipeline 710, a channel for guiding a second solid material fraction SF2 from the second particle separator 500 to the container 700 or the pipeline 710, and a channel for guiding the third solid material fraction SF3 from the third particle separator 600 to the container 700 or the pipeline 710.

The third particle separator 600 may be used for further cleaning of the pyrolytic vapours PV if the process is deemed to require an additional particle separator or if the purity requirements of the cleaned pyrolytic vapours CPV require so. Notably, the system may comprise the third particle separator 600 without comprising the second particle separator 500. Likewise, the system may comprise the third particle separator 600 and the second particle separator 500 without comprising such a container 700 or a pipeline 710 into which solid fractions from both the second particulate separator 500 and the third particle separator 600 are guided.

In particular, the third solid material fraction SF3 comprises pyrolysis residuals, and in this way may contain materials with high calorific value. Instead, if such second fluidizing gas Gas2 is used that its oxygen content is sufficient for combustion, the second solid fraction SF2 would only contain materials with a low calorific value. Thus, there would be no need to mix these fractions. Moreover, because the third solid material fraction SF3 comprises pyrolysis residuals, it may be used as the auxiliary fuel or as the secondary fuel. Figure 5b shows an embodiment, in which the third solid material fraction SF3 forms at least a part of the auxiliary fuel. Naturally the auxiliary fuel may comprise also other combustible materials. Even if the embodiment of Fig. 5b includes the second particle separator 500, the second particle separator 500 is not always needed, if pyrolysis residuals are burnt in the particulate material heater 300. An amount of ash may be very low, whereby separation is not needed. The embodiment of Fig. 5b comprises a sixth channel 460 for conveying the third solid material fraction SF3 to the particulate material heater 300 for use as an auxiliary fuel for heating the particulate material. In the alternative the third solid material fraction SF3 could be burned for heating the secondary fluidizing gas Gas2 in the gas heater 330. In such an embodiment, the system comprises the sixth channel 460, which would be for conveying the third solid material fraction SF3 to the gas heater 330 of the particulate material heater 300 for use as the secondary fuel, as shown in Fig. 5b. The sixth channel 460 of Fig. 5b indicates the two uses: as the auxiliary fuel for heating the particulate material and as the secondary fuel in the gas heater 330.

Instead, if second fluidizing gas Gas2 with a low oxygen content is used, also the second solid fraction SF2 will contain materials with a high calorific value. Thus, there material fraction SF2 and SF3 can be used in a similar manner and collected in the same pipeline 710 or container 700 (Fig. 5a). The term low oxygen content will be defined quantitively below. A corresponding embodiment comprises guiding the third solid material fraction SF3 and the second solid material fraction SF2 to the container 700 or the pipeline 710. In the container 700 or the pipeline 710, the materials of the third solid material fraction SF3 and the second solid material fraction SF2 may be mingled. More preferably, the material receivable from the container 700 or the pipeline 710 is burned. From the container 700 or the pipeline 710, the solid fractions may be conveyed away from the system for use in other systems or applications or retained near the system. Figure 5a shows an embodiment, in which the third solid material fraction SF3 and the second solid fraction SF2 are mingled. Any one of the second solid fraction SF2, the third solid material fraction SF3, and a mixture of these can be used e.g. as the secondary fuel in the gas heater 330 for heating the second fluidizing gas Gas2 by combustion, as shown in Fig. 5a by an arrow. Notably, the secondary fuel can be burned, even if an oxygen content of the secondary fluidizing gas Gas2 is low.

If no heat is produced by combustion of the auxiliary fuel in the particulate material heater 300, the oxygen content of the second fluidizing gas Gas2 can be reduced. This improves the control and safety aspects of the process, as described before, and enables the separation of pyrolysis residuals, such as char, from the particulate material in the particulate material heater 300. In such an embodiment, an oxygen content of the second fluidizing gas Gas2 is low, i.e. at most 5 vol.-%. The embodiment also comprises feeding the second fluidizing gas Gas2 into the particulate material heater 300 such that the second fluidizing gas Gas2 separates at least some of the pyrolysis residuals from the particulate material arranged in the particulate material heater 300. The oxygen content of the second fluidizing gas can be lowered by replacing at least a part of the oxygen-containing gas, such as air, with another gas, such as nitrogen.

The separation of the pyrolysis residuals from the particulate material can be facilitated by using sand as the particulate material, because sand is reasonably non-porous (i.e. heavy) and has a sufficiently large particle size. Thus, in an embodiment, the particulate material comprises sand. In addition to sand, other potential particulate materials include, for example, clay materials, aluminium oxide (Al₂O₃), or the like. The choice of the type of the particulate material used can be made to improve and optimize the separation of the pyrolysis residuals from the particulate material. Important qualities of the particulate material include the density and the particle size. In an embodiment, the density is 1200-3800 kg/m³, preferably 1900-3300 kg/m³, more preferably 2500-2900 kg/m³. Herein the term density refers to the particle density also known as the true density or grain density, i.e. the mass of the solid particles that make up the sand divided by the volume of these particles only, excluding the volume any voids or spaces between the particles. In an embodiment, the particle size is 50-500 µm, preferably 250-450 µm. In an embodiment, the particulate material comprises sand having a density of 1200-3800 kg/m³, preferably 1900-3300 kg/m³, more preferably 2500-2900 kg/m³ and a particle size of 50-500 µm, preferably 250-450 µm. The particle size refers to a sieve size of the particulate material.

The method may further comprise separating, e.g. in the second particle separator 500, from a mixture of the second fluidizing gas Gas2 and the at least some of the pyrolysis residuals a second solid material fraction SF2 and a gaseous fraction. Preferably the method comprises burning the second solid material fraction SF2. The second solid material fraction SF2 thus preferably comprises at least char, which is combustible. For the reasons detailed above, in this embodiment, an oxygen content of the second fluidizing gas Gas2 is low.

Operating the system according to the above method can further increase the yield of combustible material in the form of the second solid material fraction SF2 and the third solid material fraction SF3, thus increasing the potential yield of a combustible fuel to be used as an auxiliary fuel in the particulate material heater 300. And, as mentioned, the third particle separator 600 further improves the quality of the pyrolysis product feed, the pyrolytic vapours PV into cleaned pyrolytic vapours CPV.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

## Claims

1. A system for pyrolyzing pyrolyzable material (PM) to produce pyrolytic vapours (PV), the system comprising
- a pyrolysis reactor (100) for pyrolyzing pyrolyzable material (PM) to form a pyrolysis product feed, the pyrolysis reactor (100) comprising first distributors (110) for feeding first fluidizing gas (Gas1) into the pyrolysis reactor (100),
- a first inlet (120) for feeding pyrolyzable material (PM) into the system,
- a first particle separator (200) for separating the pyrolytic vapours (PV) and a first solid material fraction (SF1) from the pyrolysis product feed,
- a first channel (410) for guiding the pyrolysis product feed from the pyrolysis reactor (100) to the first particle separator (200),
- a second channel (420) for guiding the first solid material fraction (SF1) from the first particle separator (200) to a particulate material heater (300), and
- a third channel (430) for guiding at least a part of a heated first solid material fraction from the particulate material heater (300) to the pyrolysis reactor (100), wherein
- the particulate material heater (300) comprises
∘ second distributors (320) for feeding second fluidizing gas (Gas2) into the particulate material heater (300) to fluidize particulate material within the particulate material heater (300) and
∘ an electric heater (310) configured to electrically heat particulate material arranged in the particulate material heater (300).

2. The system of claim 1, or the method of any of the claims 8 to 15, wherein
- the electric heater (310) comprises
∘ a first electric lead (311),
∘ a second electric lead (312), and
∘ an electric conductor (313) connected to the first electric lead (311) and the second electric lead (312), the electric conductor (313) being configured to convert electric current running in between the first electric lead (311) and the second electric lead (312) to heat due to the Joule effect, wherein
- the electric conductor (313) is an integral piece of electrically conductive material.

3. The system of claim 1 or 2, wherein
- the particulate material heater (300) comprises a gas heater (330) configured to receive unheated gas, heat the unheated gas to form heated gas, and feed the heated gas to the second distributors (320);
preferably,
- the gas heater (330) comprises a second electric heater, a fuel-burning heater, or a hybrid electric-fuel-burning heater,
preferably,
- the gas heater (330) comprises a second electric heater configured to convert only electric energy to heat.

4. The system of any of the claims 1 to 3, wherein
- the particulate material heater (300) comprises a second inlet (340) for feeding auxiliary fuel into the particulate material heater (300).

5. The system of any of the claims 1 to 4, comprising
- a second particle separator (500) and
- a fourth channel (440), wherein
- the fourth channel (440) is configured to guide a mixture of the second fluidizing gas (Gas2) and a part of the particulate material arranged in the particulate material heater (300) from an upper part of the particulate material heater (300) to the second particle separator (500).

6. The system of any of the claims 1 to 5, comprising
- a third particle separator (600) configured to separate from the pyrolytic vapours (PV) a third solid material fraction (SF3) and cleaned pyrolytic vapours (CPV) and
- a fifth channel (450), wherein
- the fifth channel (450) is configured to guide the pyrolytic vapours (PV) from the first particle separator (200) to the third particle separator (600),
preferably,
[A]
the system comprises the features of claim 5 and further comprises
- a container (700) or a pipeline (710),
- a channel for guiding a second solid material fraction (SF2) from the second particle separator (500) to the container (700) or the pipeline (710), and
- a channel for guiding the third solid material fraction (SF3) from the third particle separator (600) to the container (700) or the pipeline (710); or
[B]
- the system comprises a sixth channel (460) for conveying the third solid material fraction (SF3) to the particulate material heater (300) for use as an auxiliary fuel for heating the particulate material or as a secondary fuel for heating secondary fluidizing gas (Gas2).

7. The system of any of the claims 1 to 6, comprising a controller configured to
- at a first period, drive electric current to the electric heater (310) to electrically heat particulate material arranged in the particulate material heater (300) with a first electric power,
- receive information indicative of an environment parameter affecting operating possibilities and/or operating cost of the particulate material heater (300),
- determine by using the received information that at a second period or a third period heating particulate material with electricity is not possible or is less economical than during the first period, and
- at the second period or at the third period, either
• not driving any electric current to the electric heater (310) or
• drive electric current to the electric heater (310) to electrically heat particulate material arranged in the particulate material heater (300) with a second electric power that is less than the first electric power.

8. A method for pyrolyzing pyrolyzable material (PM) to produce pyrolytic vapours (PV), the method comprising
- feeding pyrolyzable material (PM) into a pyrolysis reactor (100),
- feeding first fluidizing gas (Gas1) into the pyrolysis reactor (100) to fluidize particulate material arranged in the pyrolysis reactor (100),
- pyrolyzing the pyrolyzable material (PM) in the pyrolysis reactor (100) by contacting the pyrolyzable material (PM) with the particulate material, thereby forming a pyrolysis product feed,
- separating, from the pyrolysis product feed, the pyrolytic vapours (PV) and a first solid material fraction (SF1),
- guiding the first solid material fraction (SF1) into a particulate material heater (300),
- feeding second fluidizing gas (Gas2) into the particulate material heater (300) through second distributors (320) to fluidize materials arranged in the particulate material heater (300),
- at a first period, heating the particulate material arranged in the particulate material heater (300) using an electrical heater (310), and
- guiding heated particulate material from the particulate material heater (300) into the pyrolysis reactor (100).

9. The method of claim 8, comprising
- at the first period or at a second period, heating the second fluidizing gas (Gas2) upstream from the second distributors (320);
preferably,
- at the first or the second period the second fluidizing gas (Gas2) is heated upstream from the second distributors (320) by burning secondary fuel or by using electricity;
in an embodiment,
- the second fluidizing gas (Gas2) is heated upstream from the second distributors (320) by burning secondary fuel at the second period and
- at the second period, a price of electricity is higher than at the first period.

10. The method of the claim 8 or 9, wherein
- at the first period or at a third period, feeding auxiliary fuel into the particulate material heater (300), wherein
- an oxygen content of the second fluidizing gas (Gas2) is at least 15 vol.-% to allow combustion of the auxiliary fuel in the particulate material heater (300);
preferably,
- the auxiliary fuel is fed into the particulate material heater (300) at the third period and
- at the third period, the electrical heater (310) is not used to heat the particulate material arranged in the particulate material heater (300),
more preferably,
- at the third period, a price of electricity is higher than at the first period.

11. The method of claim 10, wherein the auxiliary fuel comprises at least one of:
∘ gaseous fuel, such as natural gas, receivable from a container,
∘ liquid fuel, such as fuel oil, receivable from a container,
∘ gaseous fuel receivable from an equipment comprising the pyrolysis reactor (100),
∘ liquid fuel receivable from an equipment comprising the pyrolysis reactor (100), and
∘ solid fuel including or not including the pyrolyzable material.

12. The method of any of the claims 8 to 11, wherein
- an oxygen content of the second fluidizing gas (Gas2) is, at least at the first period, at most 5 vol.-%, the method comprising
- feeding the second fluidizing gas (Gas2) into the particulate material heater (300) such that the second fluidizing gas (Gas2) separates at least some of the pyrolysis residuals from the particulate material arranged in the particulate material heater (300),
- separating from a mixture of the second fluidizing gas (Gas2) and the at least some of the pyrolysis residuals a second solid material fraction (SF2) and a gaseous fraction;
preferably the method comprises
- burning the second solid material fraction (SF2).

13. The method of the any of the claims 8 to 12, comprising
- separating from the pyrolytic vapours (PV) a third solid material fraction (SF3) and cleaned pyrolytic vapours (CPV);
preferably the method comprises the features of claim 11 and further comprises
- guiding the third solid material fraction (SF3) and the second solid material fraction (SF2) to a container (700) or a pipeline (710);
optionally,
- in the container (700) or the pipeline (710), the materials of the third solid material fraction (SF3) and the second solid material fraction (SF2) are mingled;
preferably,
- the method comprises burning the material receivable from the container (700) or the pipeline (710).

14. The method of any of the claims 8 to 13, wherein
- the pyrolyzable material (PM) contains at least 50 mass-% plastic, preferably at least 75 mass-% plastic or at least 90 mass-% plastic;
preferably,
- at least half of the plastic is polystyrene;
preferably also,
- an oxygen content of the second fluidizing gas (Gas2) is at most 5 vol.%.

15. The method of any of the claims 8 to 14, wherein
- a temperature of heated particulate material guided from the particulate material heater (300) into the pyrolysis reactor (100) is 300 °C to 750 °C and/or
- an oxygen content of the second fluidizing gas (Gas2) at the first period is at most 5 vol.%.
